# EUROPEAN PATENT APPLICATION

(11) **EP 4 089 636 A1**
(43) Date of publication of application: **16.11.2022**
(21) Application number: 22171505.5
(22) Date of filing: 04.05.2022
(51) Int. Cl.: G06T 7/20, G06T 7/00

(54) **APPARATUS, METHOD AND COMPUTER PROGRAM PRODUCT FOR GENERATING LOCATION INFORMATION OF AN OBJECT IN A SCENE**

(30) Priority: 12.05.2021 GB 202106722
(71) Applicant: Sony Group Corporation, Tokyo 108-0075 (JP); Sony Europe B.V., Weybridge, Surrey KT13 0XW (GB)
(72) Inventor: HAWKINS, Paul Martin, Basingstoke, RG22 4SB (GB)
(74) Representative: D Young & Co LLP

(57) **Abstract**

According to embodiments of the disclosure, an apparatus for generating location information of an object in a scene is provided, the apparatus comprising circuitry configured to: acquire image data of a scene from an image capture device; acquire predicted location information of an object in the scene indicative of a region of the scene in which the object is predicted to be located at a given time; detect one or more properties of the object from the image data, the properties of the object indicative of an observed location of the object in the scene; and generate location information of the object in the scene using the predicted location information and the one of more properties of the object.

## Description

### BACKGROUND

### Field of disclosure:

The present invention relates to an apparatus, method and computer program product for generating location information of an object in a scene.

### Description of Related Art:

The "background" description provided herein is for the purpose of generally presenting the context of the disclosure. Work of the presently named inventors, to the extent it is described in the background section, as well as aspects of the description which may not otherwise qualify as prior art at the time of filing, are neither expressly or impliedly admitted as prior art against the present invention.

In recent years, there has been an increase in the levels of video coverage of events (such as professional sporting events or the like). That is, the number of broadcasters or providers of video content has significantly increased in line with increased demand for video coverage of these events. Moreover, content digesters (such as viewers and consumers of the video content) now demand increasingly high levels of video services from the broadcasters and providers in relation to the event (or events) being covered.

In particular, there is an interest in using video coverage of an event in order to provide certain additional information regarding the event (such as additional information regarding objects at that event), which has not previously been available to content digesters. In part, this is due to a desire to provide an enhanced viewing experience and to enable an increased sense of immersion in the event. Moreover, provision of certain types of additional information may be particularly useful when analysing an even that has occurred.

However, it can be difficult to provide suitable additional information from video coverage of events.

In particular, certain events (such as sporting events or the like) are often complex, comprising a number of different objects. That is, it can be difficult in order to reliably analyse a specific object within the event (or scene) owing to the number of different objects that are present. This makes it more difficult to obtain certain information regarding these objects from images of the event.

Moreover, owing to the complexity of these events, hardware requirements for image capture systems and computational devices for analysis of the images of the event have become very restrictive and demanding. As the number of events increases, it can be difficult to provide the required image capture systems for each of these events.

For these reasons, the use of video coverage of an event in order to provide additional information is very limited. Hence, the demand for additional information often exceeds that which can be provided.

It is an aim of the present disclosure in order to address these issues.

### SUMMARY

According to a first aspect of the present disclosure, an apparatus for generating location information of an object in a scene is provided, the apparatus comprising circuitry configured to: acquire image data of a scene from an image capture device; acquire predicted location information of an object in the scene indicative of a region of the scene in which the object is predicted to be located at a given time; detect one or more properties of the object from the image data, the properties of the object indicative of an observed location of the object in the scene; and generate location information of the object in the scene using the predicted location information and the one of more properties of the object.

According to a second aspect of the present disclosure, a method of generating location information of an object in a scene is provided, the method comprising: acquiring image data of a scene from an image capture device; acquiring predicted location information of an object in the scene indicative of a region of the scene in which the object is predicted to be located at a given time; detecting one or more properties of the object from the image data, the properties of the object indicative of an observed location of the object in the scene; and generating location information of the object in the scene using the predicted location information and the one of more properties of the object.

According to a third aspect of the present disclosure, a computer program product comprising instructions which, when the instructions are implemented by a computer, cause the computer to perform a method of generating location information of an object in a scene is provided, the method comprising: acquiring image data of a scene from an image capture device; acquiring predicted location information of an object in the scene indicative of a region of the scene in which the object is predicted to be located at a given time; detecting one or more properties of the object from the image data, the properties of the object indicative of an observed location of the object in the scene; and generating location information of the object in the scene using the predicted location information and the one of more properties of the object.

According to embodiments of the disclosure, the location of an object within a scene can be efficiently and reliably determined from images obtained from a simple image capture system (such as a single image capture device). The location of the object in the images of the scene can be further analysed in order to determine further additional information regarding the object. Indeed, the additional information (including the location of the object) which can be determined by embodiments of the disclosure may be particularly advantageous when used for training in order to improve the performance of a physical skill or performance of a physical task.

Of course, the present disclosure is not particularly limited to these advantageous technical effects, there may be others as will be apparent to the skilled person when reading the disclosure.

The foregoing paragraphs have been provided by way of general introduction, and are not intended to limit the scope of the following claims. The described embodiments, together with further advantages, will be best understood by reference to the following detailed description taken in conjunction with the accompanying drawings.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
Figure 1 illustrates an apparatus according to embodiments of the disclosure;
Figure 2 illustrates an example situation to which embodiments of the disclosure may be applied;
Figure 3 illustrates an apparatus in accordance with embodiments of the disclosure;
Figure 4 illustrates a series of images captured by an image capture device in accordance with embodiments of the disclosure;
Figure 5A illustrates a predicted location of an object in accordance with embodiments of the disclosure;
Figure 5B illustrates the generation of location information of an object in accordance with embodiments of the disclosure;
Figure 5C illustrates location information of an object in accordance with embodiments of the disclosure;
Figure 6 illustrates a method in accordance with embodiments of the disclosure.

### DESCRIPTION OF THE EMBODIMENTS

Referring now to the drawings, wherein like reference numerals designate identical or corresponding parts throughout the several views.

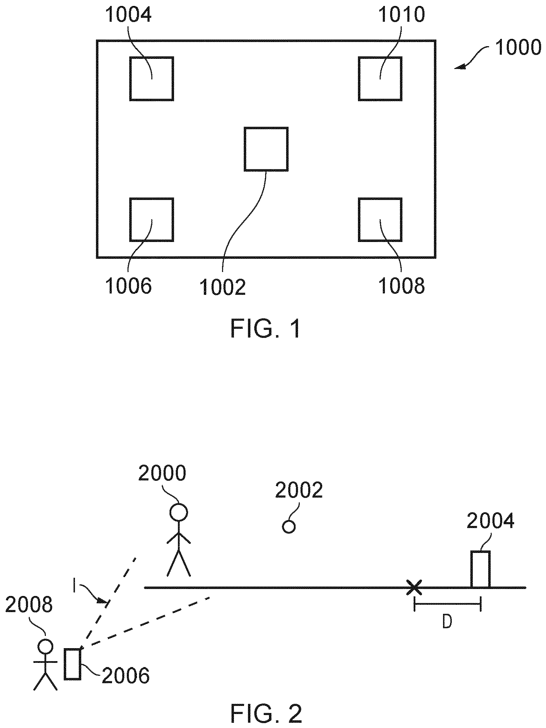

In Figure 1, an apparatus 1000 according to embodiments of the disclosure is shown. Typically, an apparatus 1000 according to embodiments of the disclosure is a computer device such as a personal computer or a terminal connected to a server. Indeed, in embodiments, the apparatus may also be a server. The apparatus 1000 is controlled using a microprocessor or other processing circuitry 1002.

The processing circuitry 1002 may be a microprocessor carrying out computer instructions or may be an Application Specific Integrated Circuit. The computer instructions are stored on storage medium 1004, which may be a magnetically readable medium, optically readable medium or solid-state type circuitry. The storage medium 1004 may be integrated into the apparatus 1000 (as shown) or, alternatively, may be separate to the apparatus 1000 and connected thereto using either a wired or a wireless connection. The computer instructions may be embodied as computer software that contains computer readable code which, when loaded onto the processor circuitry 1002, configures the processor circuitry 1002 to perform a method according to embodiments of the disclosure.

Now, additionally connected to the processor circuitry 1002, is a user input 1006. The user input 1006 may be a touch screen or maybe a mouse or stylist type input device. The user input 1006 may also be a keyboard or any combination of these devices. The user input 1006 may also be configured to receive audio input such as voice instructions or the like. The present disclosure is not particularly limited in this respect.

A network connection 1008 is also coupled to the processor circuitry 1002. The network connection 1008 may be a connection to a Local Area Network or a Wide Area Network such as the Internet or a Virtual Private Network or the like. The network connection 1008 may be connected to external servers or devices allowing the processor circuitry 1002 to communicate with the other servers or devices in order to obtain relevant data or provide relevant data to these other servers or devices. Furthermore, the network connection 1008 may be located behind a firewall or some other form of network security. Indeed, network connection 1008 may be used to perform encrypted communication with a connected device.

Additionally coupled to the processing circuitry 1002, is a display device 1010. The display device, although shown integrated into the apparatus 1000, may additionally be separate to the apparatus 1000 and may be a monitor or some kind of device allowing the user to visualise the operation of the system. In addition, the display device 1010 may be a printer or some other device allowing relevant information generated by the apparatus 1000 to be viewed by the user or by a third party. In fact, apparatus 1000 may be able to output data to a number of display devices 1010 simultaneously.

A more specific configuration of the apparatus 1000 according to embodiments of the disclosure will be described with reference to the following description and drawings.

Turning now to Figure 2, an example situation to which embodiments of the present disclosure may be applied is illustrated. Specifically, a sporting event is illustrated in Figure 2. The sporting event may be a sporting event such as a cricket match, baseball match, tennis match or the like. However, the example of Figure 2 of the present disclosure will be described with reference to a cricket match.

In this example, a player 2000 is playing the game of cricket. The player 2000 plays the game of cricket by bowling a ball towards a target (i.e. the cricket stumps). A second player (not shown) also plays the game by attempting to hit the ball with an object such as a bat such that the ball does not hit the target (i.e. the cricket stumps).

When the player 2000 bowls the ball towards the target, the ball follows a trajectory such as that illustrated as PI in Figure 2. In particular, the player 2000 may bowl the ball 2002 towards the target such that the ball 2002 bounces (i.e. hits the ground) a certain distance D in front of the target (that is, the cricket stumps) such that the ball bounces off the ground towards the target 2004.

Now, it will be appreciated that it is often desired that certain additional information regarding the cricket ball once it has been bowled by the player 2000 is known or provided. This additional information may include the location of the ball, the speed of the ball, the spin applied to the ball, a projected path of the ball or the like. This additional information may be particularly useful for a person (such as a coach or the like) who wishes to use the additional information in order to assist in training the player such that they can improve the player's performance in the sport. Furthermore, this additional information may be particularly useful for an adjudicator, referee or umpire who is tasked with determining whether or not a player who plays the sport (such as cricket) follows certain rules and restrictions of the game. For example, it may be necessary to determine whether or not the ball would have reached the target if it had not been illegitimately impeded by an object other than a bat of a second player (e.g. batsman).

Therefore, additional information regarding the ball once it has been bowled by the player is desired.

It will be appreciated that the environment in which the sporting event is played is a three-dimensional real world environment. Therefore, the ball has a three dimensional location in the sporting environment which changes overtime.

In a known system, a plurality of image capture devices may be provided at predetermined locations around the sporting environment to capture a series of high quality images of the ball as it passes through the environment once it has been bowled by the player. For example, six or more high performance image capture devices may be provided a predetermined locations around the sporting environment to capture images of the ball from different angles and locations. The images from the plurality of image capture devices may then be used in order to triangulate a location of the ball within the sporting environment. A known system such as this may be used by a professional television broadcaster or the like in order to provide additional information to supplement and support a video broadcast.

However, there is problem in that the known system requires a complex image capture system comprising a plurality of high performance image capture devices arranged at predetermined locations around the sporting environment. Therefore, while such a known system can be used in order to provide certain additional information regarding an object such as the ball as it passes through the environment at professional sporting events, the application of such a system to events other than these professional sporting events is very limited. That is, the hardware restrictions and requirements of this known system are prohibitive in the application of such technology to events other than these large scale professional sporting events (such as amateur sporting events, training sporting events, social sporting events or the like).

As such, it is desired that an apparatus, method and computer program product are provided which enable the location of an object within a scene to be efficiently and reliably determined from images obtained from a simple image capture system such as a single image capture device.

Accordingly, an apparatus, method and computer program product are provided in order to address these issues (and also the problems described in the Background of the present disclosure).

### <Apparatus>

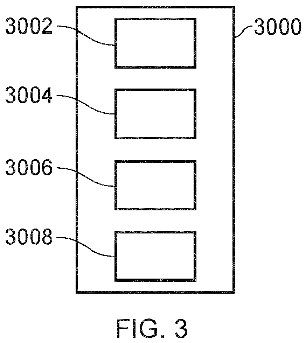

Turning to Figure 3 of the present disclosure, an apparatus 3000 for generating location information of an object in a scene is illustrated. The apparatus 3000 may be implemented as an apparatus such as apparatus 1000 as described with reference to Figure 1 of the present disclosure. The apparatus comprises an acquiring unit 3002, an acquiring unit 3004, a detecting unit 3006 and a generating unit 3008.

The acquiring unit 3002 of apparatus 3000 is configured to acquire image data of a scene from an image capture device. In particular, the acquiring unit 3002 of apparatus 3000 may be configured in order to acquire the image data of the scene from a single image capture device which is configured in order to capture image data of the scene.

Then, the acquiring unit 3004 of apparatus 3000 is configured to acquire predicted location information of an object in the scene indicative of a region of the scene in which the object is predicted to be located at a given time.

The detecting unit 3006 of apparatus 3000 is configured to detect one or more properties of the object from the image data, the properties of the object indicative of an observed location of the object in the scene. The observed location of the object in the scene may be the location of a ball once it has been bowled by player 2000 for example.

Finally, generating unit 3008 is configured to generate location information of the object in the scene using the predicted location information and the one of more properties of the object. The location information of the object which is generated by the generating unit 3008 may comprise a three dimensional path of the object through the scene, for example.

In this manner, apparatus 3000 is configured to efficiently and reliably generate location information of an object in a scene from a single image capture device which can thus be used in order to provide additional information regarding the object.

Further details regarding the embodiments of the disclosure will now be described with reference to Figures 3 to 6 of the present disclosure.

### <Acquiring unit>

As described with reference to Figure 3 of the present disclosure, apparatus 3000 comprises an acquiring unit 3002 which is configured to acquire image data of a scene from an image capture device.

Consider now the example sporting event which is illustrated in Figure 2 of the present disclosure. In this example sporting event (e.g. a cricket match), a player 2000 has bowled a ball 2002 towards the target 2004.

It will be appreciated that the sporting event illustrated in Figure 2 of the present disclosure may not be a professional sporting event. Rather, the sporting event may, for example, be an amateur sporting events, training sporting events, social sporting events or the like. Alternatively, the sporting event may be a professional sporting event where the availability of complex image capture systems is restricted.

Nevertheless, the embodiments of the disclosure enable the use of simple image capture systems (such as a single image capture device) in order to generate location information of an object (such as the ball) and acquire additional information regarding that object which can be used for further analysis, training or the like.

In this example situation, a coach or instructor 2008 is watching the player 2000 playing the sport. That is, the coach 2008 is stood a distance from the player 2000 and watches the player 2000 bowl the ball 2002 towards the target. Furthermore, an image capture device 2006 is provided which is configured to capture images of the sporting event (i.e. the scene). The image capture device 2006 may be any type of image capture device which is able to capture images of the sporting event. The images which are captured by the image capture device may be a series of single or individual images of the scene. Alternatively, the images captured by the image capture device 2006 may form an image sequence (such as a video of the scene). As such, in some examples, the image capture device 2006 may capture a plurality of images of the scene.

The coach 2006 therefore operates the image capture device 2006 in order to capture images of the player 2000 bowling the ball 2002 towards the target.

In other examples, such as during a sporting event (e.g. a cricket match or the like) a referee or umpire may be watching the player 2000 playing the sport. The referee (or umpire in the game of cricket) may be watching the player 2000 play the sport with a view to ensuring that the player plays the sport in accordance with the predetermined rules of that sport. If the player does not play within these rules, then the umpire may declare that foul play has occurred. Accordingly, the player (or the team for which the player plays) may be penalised. In this manner, the umpire has the role of an adjudicator of the sporting event. In some example situations, the umpire may be provided with the image capture device 2006. This enables the image capture device 2006 to obtain images of the sporting event from the same location as the umpire. That is, the umpire may operate the image capture device in order to capture images of the player 2000 bowling the ball 2002 towards the target. It will be appreciated that the umpire is typically positioned close to the player 2000 such that the umpire can see whether the player follows the rules of the sporting event. Therefore, when the image capture device is operated by the umpire, the image capture device 2006 may have good visibility of the ball 2002 as it is bowled by the player 2000 towards the target. That is, owing to the unique location of the umpire within the sporting environment, the image capture device operated by the umpire may capture image data (e.g. image frames) with very good visibility of the initial action (e.g. as the ball is released by the player 2000 when being bowled towards the target). This image data of the initial action may be particularly advantageous when used by apparatus 3000 to generate location information of the object in the scene.

In some examples, the image capture device 2006 may be a dedicated image capture device (such as a camera or the like). However, in other examples, the image capture device may be an image capture device which is integrated into a different electronic device. For example, the image capture device 2006 may be an image capture device which is part of a user electronic device such as a portable electronic device (including, for example, a smartphone or tablet or the like). Moreover, in some examples, the image capture device may be releasably attached to the user, which enables the user to operate the image capture device without holding the device. Indeed, in some examples, the image capture device may be a device such as a body camera or the like.

Therefore, in some examples, the coach (or umpire) 2008 may operate a personal portable electronic device (such as a smartphone) in order to capture images of the player 2000 as they bowl the ball towards the target. However, in other examples, the image capture device may be controlled by the apparatus 3000 in order to capture the image or images of the scene.

It will be appreciated that the type of images which are obtained by the image capture device 2006 in accordance with the present disclosure are not particularly limited. For example, the images captured by the image capture device 2006 may be high resolution images of the scene. However, the present disclosure is not particularly limited in this regard. That is, the image need not be a high resolution image of the scene and may be a lower resolution image of the scene.

In addition, it will be appreciated that the number of images which are captured by the image capture device 2006 of the scene (i.e. of the sporting event) is not particularly limited. For example, the image capture device may capture a small number of images of the scene. Moreover, the time at which these images are captured as the ball moves towards the target (once it has been bowled by player 2000) is not particularly limited. The images captured by the image capture device may include images of the ball at the start of its trajectory (i.e. as it is released from the hand of the player) and one or more further images as the ball approaches the target. Preferably, the images captured by the image capture device include a number of images of the ball both before the ball hits the ground and after the ball hits the ground. However, the present disclosure is not particularly limited in this regard.

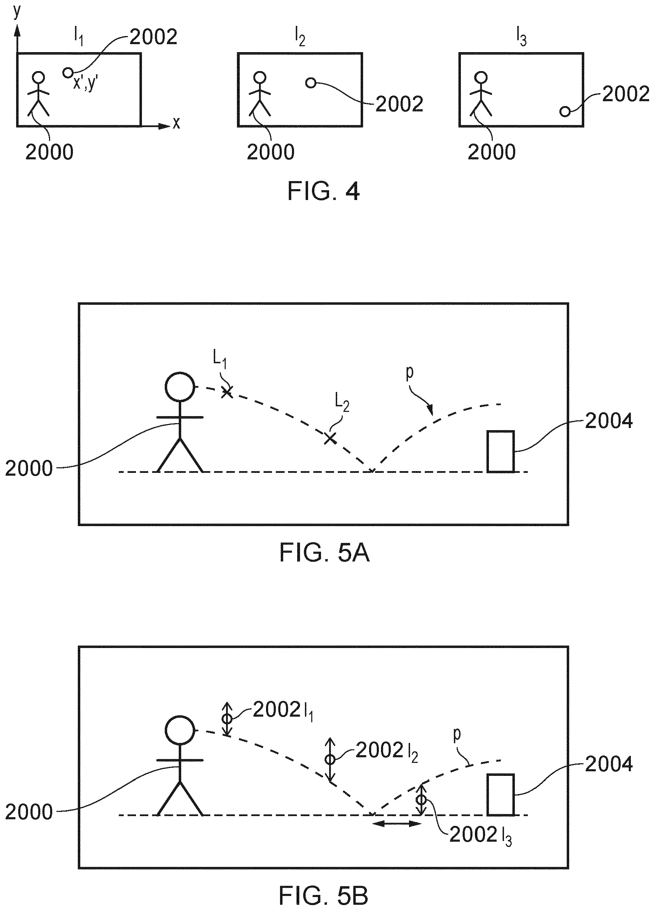

Figure 4 of the present disclosure illustrates a series of images captured by an image capture device in accordance with embodiments of the disclosure. These images may be images captured using image capture device 2006 illustrated in Figure 2 of the present disclosure, for example.

The images illustrated in Figure 4 of the present disclosure include a first image 11, a second image 12 and a third image 13. Each of the images 11, 12 and 13 comprise the player 2000 and the ball 2002. A number of additional features or objects (not shown) may also be included in these images (such as the target 2004, for example).

The first image I1 is an image captured at a first time T1. In this example, time T1 is a time after the ball 2002 has been bowled by the player 2000. The second image is an image captured at a second time T2 after the time of capture T1 of the first image 11. The third image is an image captured at a third time T3 after the time of capture T2 of the second image 12.

As such, in the first image I1, the ball is at an early stage of its trajectory having been bowled by the player 2000. As such, in image I1, the ball 2002 appears close to the player 2000. The second image 12 is an image captured after image I1 and the ball 2002 has therefore progressed along its trajectory towards the target. In image 13, the ball 2002 is further along its trajectory and is close to the ground.

The series of images I1, 12 and 13 therefore show, in discrete steps, a two dimensional representation of the ball once it has been bowled by the player 2000.

Of course, it will be appreciated that the present disclosure is not particularly limited to the example images illustrated in Figure 4 of the present disclosure. Nevertheless, these example images are illustrative of the type of images which may be captured by an image capture device 2006 in some example situations.

Moreover, it will be appreciated that the image capture device 2006 need not be located at a predetermined location within the environment. That is, the images captured by the image capture device 2006 can be captured from any location within the environment. In fact, the image capture device 2006 does not need to be calibrated for a given location as the apparatus 3000 may, optionally, be configured to perform calibration on the images which have been acquired by the image capture device when generating the location information of the object in the scene.

Consider, for example, the situation described with reference to Figure 2 of the present disclosure. Here, player 2000 is playing a sport such as tennis, cricket or the like. In particular, in the context of a cricket match, the player 2000 bowls the ball 2002 towards a target (i.e. cricket stumps).

The coach 2008 operates an image capture device 2006 in order to capture images of the scene. The field of view I of the image capture device 2006 is shown in Figure 2. This field of view encompasses the player 2000 and the target 2004. Therefore, the target 2004 appears in the images which are captured of the scene by the image capture device. However, the target (i.e. the cricket stumps) have a predetermined size and configuration (that is, for example, all cricket stumps must conform to a standard height and location on the pitch). As such, the appearance of the target within the images can be used by apparatus 3000 in order to perform a calibration of the images captured by the image capture device.

However, the present disclosure is not particularly limited in this regard. That is, calibration of the image can be performed using information regarding any known object or feature which appears in the images captured by the image capture device depending on the situation. For example, in the context of a sporting event such as a tennis match or the like, the location and orientation of features such as the lines (e.g. the baseline) which defines the court can be used by apparatus 3000 for calibration of the images.

Alternatively, in some examples, the coach 2008 (or some other operator of image capture device 2006 or apparatus 3000) may perform a certain calibration operation before capturing the images of the sporting event. That is, the coach 2008 may provide information regarding the location of the image capture device at time of image capture. Alternatively, the coach 2008 may operate the image capture device 2006 in order to capture one or more calibration images of the scene.

Once the image or images of the scene have been captured by the image capture device 2006, the acquiring unit 3002 of apparatus 3000 is configured to acquire image data from the image capture device 2006.

That is, the acquiring unit 3002 of apparatus 3000 may communicate with the image capture device 2006 in order to acquire image data of the image or images which have been captured. This may be performed by any wired or wireless communication. For example, when the image capture device 2006 is integrated as part of a user electronic device (such as a smartphone or tablet) the acquiring unit 3002 may be configured to acquire image data over a network such as the internet or the like. This may include, for example, uploading the images which have been captured by the image capture device 2006 to a server for processing by apparatus 3000.

In some examples, the image data may be acquired from the image capture device 2006 in a substantially real time environment (i.e. as the images are captured by the image capture device). In this manner, the acquiring unit 3002 may acquire a live stream of image data from the image capture device 2006. However, in other examples, the acquiring unit 3002 may acquire image data which has previously been captured by the image capture device 2006. For example, the image capture device 2006 may capture images of the scene and store those images in a storage device. Then, the acquiring unit 3002 may acquire the images from the storage device when it is desired that apparatus 3000 performs processing on the images which have been captured by the image capture device 2006.

Indeed, in some examples, the acquiring unit 3002 may be implemented as a network connection 1008 as described with reference to Figure 1 of the present disclosure. However, the present disclosure is not particularly limited in this regard, and the acquiring unit 2002 may be implemented as any circuitry which is configured to acquire the image data from the image capture device 2006 as required depending on the situation to which the embodiments of the disclosure is applied.

In this manner, the acquiring unit 3002 is configured to acquire image data of a scene from the image capture device.

### <Acquiring unit>

Now, as described with reference to Figure 3 of the present disclosure, apparatus 3000 comprises an acquiring unit 3004. Acquiring unit 3004 of apparatus 3000 is configured to acquire predicted location information of an object in the scene indicative of a region of the scene in which the object is predicted to be located at a given time.

Consider again the example sporting event described with reference to Figure 2 of the present disclosure. A sporting event such at this takes place in a three dimensional real world environment. Therefore, objects within the environment (such as player 2000 and ball 2002) move within this three dimensional environment and have a three dimensional location in the environment at any given time during the sporting event.

However, as described above, the apparatus 3000 of the present disclosure can acquire image data from a simple image capture system (such as a single image capture device 2006) and still generate location information for the object in the scene. In the case of image data from single image capture device 2006, the image data which is acquired by the apparatus 3000 provides a single viewpoint of the scene. Therefore, the apparatus 3000 may have only a single two-dimensional set of image data (an acquisition track) showing the scene and the locations of the objects within that scene.

It can therefore be difficult to efficiently and reliably obtain a three dimensional location of the objects within the scene from the two-dimensional set of image data which is acquired by the apparatus 3000 from the image capture device.

However, according to the present disclosure, the acquiring unit 3004 is configured to acquire predicted location information of an object in the scene. This predicted location information can then be used by the generating unit 3008 in order to generate location information of the object in the three dimensional environment. That is, apparatus 3000 uses a plurality of knowledge sources (including the default trajectory of the ball) in order to constrain the three dimensional location of the ball within environment from the image data from the image capture device 2006.

In the example of Figure 2, the predicted location information of the present disclosure may, for example, be considered a default trajectory of the ball 2002 once it has been bowled by the player 2000.

Figure 5A of the present disclosure illustrates a predicted location of an object in accordance with embodiments of the disclosure.

Similar to Figure 2 of the present disclosure, Figure 5A illustrates an example sporting event such as a cricket match or the like. When playing cricket, it is known that the player 2000 will bowl the ball 2002 towards the target 2004 (i.e. the cricket stumps). Moreover, it is known that the cricket ball will follow a certain default trajectory each time it is bowled. Variations from the certain default trajectory will be observed, but the default trajectory provides an initial path which can be used in order to approximate the location of the ball in the scene. This initial path can then be constrained, by the generating unit 3008, in order to generate the location information for the ball 2002.

In the example of Figure 5A, the player 2000 is shown with target 2004. At this stage, the player 2000 may not have bowled the ball towards the target. Therefore, the ball is not shown in this example situation.

However, the acquiring unit 3004 of apparatus 3000 is configured to acquire predicted location information of the ball. This is a default trajectory (or path) through the three dimensional environment the ball is expected to follow once it has been bowled by the player 2000. As such, the predicted location information is illustrated in Figure 5A of the present disclosure as a path P from the player 2000 to the target 2004.

It will be appreciated that the default trajectory may vary based on certain information regarding the sporting event. For example, the default trajectory of the ball which is acquired by the acquiring unit 3004 of apparatus 3000 may vary depending on information such as the type of player 2000 who bowled the ball. This information may include, for example, the skill level of the player 2000, physical characteristics of the player 2000 (e.g. their height), historic performance data for the player 2000 (e.g. a set of previous trajectories of the ball which have been observed for the player 2000) or the like. Moreover, in the context of a cricket match, the default trajectory may vary depending on the type of the bowler (e.g. whether the player bowls the ball as a fast bowler or a spin bowler).

Indeed, in some examples, the default path or trajectory of the object may be defined by a number of trajectory coefficients. The default path or trajectory of the object can then be varied by changing the values of the trajectory coefficients depending on the situation. These trajectory coefficients may include, for example, a default point of release of the ball by player 2000, a default bounce location (i.e. point of contact with the ground), a default speed of the ball and the like. Together, the default or initial values of these trajectory coefficients can be used in order to define the default path or trajectory of the object (i.e. the predicted location information).

It will be appreciated that the predicted location information indicates the region of the scene in which the object is predicted to be located at a given time after it has been bowled by player 2000. For example, at a first time (being a time close to the time at which the ball is bowled by the player 2000) it is predicted that the ball will be at a first location L1 on the path P. However, at a later second time, it is predicted that the ball will be at a second location L2 on the path P.

As such, the predicted location information indicates the region of the scene at which the ball is predicted to be located for any given time after the ball has been bowled by the player 2000.

Now, it will be appreciated that the acquiring unit 3004 may be configured in order to acquire the information regarding the predicted location of the object in a number of different ways depending on the situation. For example, in some situations a user may provide a user input which enables the acquiring unit to acquire the predicted location of the object (i.e. the default trajectory of the object). This may include operation of a user interface or the like in order to provide certain information to apparatus 3000.

In some examples, a user (such as coach 2008) may operate a user interface of either apparatus 3000 or a portable electronic device in order to provide certain information (such as the physical characteristics of the player 2000) which can then be acquired by the acquiring unit 3004. Such a physical characteristic of the player may include characteristics such as the height of the player, for example. A taller player will bowl the bowl from a different height than compared to a shorter player. As such, the physical characteristics of the player, which can be provided by operation of a user interface or the like, can lead to variations in the predicted location of the object which is acquired by acquiring unit 3004. Therefore, in some examples, when the object is a ball which is bowled by a player, the acquiring unit 3004 is configured to acquire different predetermined predicted location information depending on the player who bowled the ball.

Alternatively, the acquiring unit 3004 may be configured to acquire certain information which can be used in order to acquire the predicted location of the object from the image data itself. That is, the acquiring unit 3004 may be configured to acquire information regarding the physical characteristics of the player (e.g. the height of the player) from the image data and/or acquire information regarding the type of activity which is being performed from the image data (e.g. identify whether the sporting event is a tennis match or a cricket match, for example). Indeed, the acquiring unit 3004 may acquire different predetermined predicted location information for the object depending on a type of the object (e.g. whether the object is a tennis ball, a cricket ball or a baseball, for example).

Moreover, the acquiring unit 3004 may be configured to acquire the predicted location of the object (i.e. the default trajectory of the object) from an internal/external database or storage. That is, a number of different default trajectories of the object may be stored in a storage unit and a default trajectory may be selected from those default trajectories stored in the storage unit by the acquiring unit 3004 as use as the predicted location of the object (i.e. ball 2002) in the scene. In some examples, the default trajectories stored in the storage unit may be trajectories of the object which have been observed in historic events. However, in other examples, the default trajectories may be generated based on computational models (i.e. simulations). A default trajectory may be selected from the number of different default trajectories which are available based on one or more properties of the object, player or event as described above.

Consider again the example of Figure 5A of the present disclosure. In this example, the player 2000 may be identified in image data which has been acquired by the acquiring unit 3002. Additionally, acquiring unit 3004 acquires certain information which is used in order to acquire a predicted location of the object. In this example, the certain information may include the fact that the player is playing cricket, for example. Based on this certain information, the acquiring unit 3004 acquires the predicted location of the object. As previously explained it will be appreciated that, in this example, the predicted location of the object is a predicted path of the object (e.g. the ball) through the physical environment once it has been bowled by the player 2000. As such, the predicted location can be obtained even before the player 2000 has bowled the ball.

In this example, the predicted location is illustrated as a default trajectory P. The default trajectory P shows the predicted or expected location of ball at different times once it has been bowled by the player 2000. The default trajectory P is therefore the best estimate of where the ball will be located at a certain time after it has been bowled by the player 2000 based on the information available to the acquiring unit 3004 at the time when the default trajectory is acquired (i.e. before the ball has been bowled by the player 2000). In different situation (such as if a different player bowls the ball) then a different default trajectory P may be acquired by the acquiring unit 3004.

Of course, while the predicted location illustrated in Figure 5A of the present disclosure shows a two-dimensional predicted location, it will be appreciated that the predicted location of the object in the present disclosure is, more generally, a three-dimensional predicted location of the object.

Moreover, while the predicted location illustrates a default or expected location of the object (e.g. the ball), this will be understood as an initial estimation of the location of the object over time. As such, the predicted location is a default trajectory (specific to a particular player, for example) which can be used as an initial estimation of the location of the object until such time that further information (e.g. the acquired image data) can be used in order to constrain the location (e.g. calculate the actual trajectory of the object). In other words, the predicted location information is an initial estimate of the location of the object which will be updated using the image data from the image capture device 2006 in order to generate the location information of the object.

In fact, since the predicted location of the object is a default path or trajectory of the object which can be determined even before the ball has been bowled by the player 2000, the predicted location of the object can be acquired even before the acquiring unit 3002 acquires 3002 acquires the image data from the image capture device. As such, the predicted location of the object may be acquired during an initial set up of apparatus 3000 before the image capture device 2006 begins to capture the image data (e.g. when a user operates a user interface in order to indicate that a player 2000 will be bowling a cricket ball, for example). The predicted location information may then be loaded into memory of apparatus 3000 such that it is available once the image data has been acquired by acquiring unit 3002.

In this manner, acquiring unit 3004 of apparatus 3000 acquires a predicted location of the object.

### <Detecting unit>

As described with reference to Figure 3 of the present disclosure, the apparatus 3000 further comprises a detecting unit 3006 of apparatus 3000 is configured to detect one or more properties of the object from the image data, the properties of the object indicative of an observed location of the object in the scene.

That is, once the image data of the object and the predicted location of the object have been acquired, the detecting unit 3006 of apparatus 3006 is configured to use the image data of the object to determine an actual/observed location of the object in the scene.

It will be appreciated that the actual/observed location of the object in the scene from the image data can be determined only for the instances of time at which an image was captured by the image capture device. Therefore, the detecting unit 3006 can use the image data only to determine a limited number of discrete of locations of the object corresponding to the instances of time at which the image capture device captured an image of the scene. Moreover, because the image capture system used with apparatus 3000 may be a simple image capture system (such as a single image capture device 2006 or the like) it can be difficult to extract the three-dimensional location of the object from the image data. Indeed, when the images have been captured by a single image capture device, triangulation of the image data from a number of different image capture devices in order to determine the location of the object in the scene is not possible.

Consider again the example described with reference to Figure 2 of the present disclosure. Here, a player 2000 bowls a ball towards a target as part of a sporting event (such as a cricket match or the like). Before the ball is bowled by the player, apparatus 3000 acquires a predicted location of the object (i.e. the expected path along which the ball will travel once it has been bowled by the player). However, once the ball has been bowled by the player, the image data acquired from the image capture device provides certain information which can be used in order to determine the observed location of the ball in the environment. The observed location is the location at which the ball appears to be located from the image data received from the image capture device.

However, as explained with reference to Figure 2 of the present disclosure, since the image data is acquired from a single image capture device, the observed location of the object in the scene may not provide, in itself, a definitive location of the object within the three dimensional environment. In particular, the image data from a single view point of the scene may provide only a two-dimensional location of the object at a given time (being the time at which the image is captured by the image capture device). That is, since the image data is acquired from a single image capture device, the apparatus 3000 cannot triangulate images from different image capture devices in order to determine a three-dimensional location of the object in the environment.

Now, it will be appreciated that the manner by which the image data of the object is used in order to determine the properties of the object from the image data is not particularly limited in accordance with the present disclosure. Indeed, the manner by which the different properties are determined depends, at least in part, on the property of the object which is being detected. Nevertheless, it will be appreciated that the property or properties of the object which are detected by the detecting unit 3006 of the apparatus 3000 are those properties of the object which are indicative of the observed location of the object in the three dimensional environment. These properties can be acquired from different image frames of the image data to provide information indicative of the observed location of the object in the three dimensional environment overtime.

In the present disclosure, the one or more properties of the object which are determined from the image data can include the location of the object in the two-dimensional images which have been captured by the image capture device 2006.

In this regard, the example images of Figure 5A of the present disclosure illustrate an example of detection of one or more properties of the object from the image data.

Consider, in particular, image I1 of Figure 5A of the present disclosure. The X location of the object in the image data is the location of the object in a horizontal axis across the image, while the Y location in the image data is the location of the object in a vertical axis of the image (with the horizontal and vertical axis of the image being determined relative to either the image capture device or the ground on which the image capture device is located). As such, in image I1, the object is located at X', Y'.

The X,Y location of the object in image I1 is the observed location of the object in an image which was captured by the image capture device at a time T1. However, the X,Y location of the object at in image 12 is the location of the object in an image which was captured by the image capture device at a time T2.

In some examples, the location of the object in an image can be determined through object recognition or detection to identify the object within the image. However, it will be appreciated that the type of object recognition or detection which is used in order to identify the object within the image is not particularly limited and will depend on the type of object which is being detected. In some examples, the colour of the object can be used as a filter in order to remove noise from the image and thus improve the object recognition or detection. For example, if it is known that cricket balls are only red in colour, then only objects which are of this same colour need to be further analysed in order to determine whether or not they are the cricket ball. This can further improve the accuracy of the object detection which is performed by filtering out noise from the images which have been captured.

Thus, the X, Y (two-dimensional) location of the object at certain times corresponding to the time of image capture is one property of the object which can be determined from the image data in accordance with embodiments of the disclosure.

Of course, the detecting unit 3006 of the present disclosure may be configured to acquire a number of additional properties of the object from the image data which can be used in order to determine the location of the object within the scene.

For example, the radius of the object in the image data can be detected as a property of the object in accordance with embodiments of the disclosure.

In particular, the radius (or apparent size) of the object in the image data can be used in order to determine the Z (depth) location of the object in the image data. In fact, coupled with the X, Y location of the object, a three dimensional observed location of the object in the scene can thus be determined from the image data from a single image capture device 2006.

Consider, for example, a situation whereby the ball 2002 which is bowled by the player 2000 moves along a trajectory such that it is closer to the image capture device at the start of the trajectory, but further from the image capture device at the end of the trajectory. As the ball moves along this trajectory (and thus moves further from the image capture device) the apparent size or radius of the object in the images captured by the image capture device will decrease. Therefore, a change in the radius of the object which is being detected can be used in order to determine a change in the depth location of the object in the image data.

Moreover, if the absolute or actual physical size of the object, such as the ball, is known, then the apparent size of the object in the images which are captured by the image capture device can be used in order to determine the absolute Z location of the object in the image data (i.e. how far from the image capture device, in the depth direction, the ball is located). For example, it is known that cricket balls have a diameter of about 7cm. This information can then be used in order to determine how far the cricket ball is from the image capture device.

Thus, the radius of the object can be detected as the one or more properties of the object indicative of the location of the object in the scene (the three dimensional environment) from the image data in accordance with embodiments of the disclosure.

In some examples, the detecting unit 3006 may be configured to use further information in order to determine the location of the object in the scene (the three dimensional environment).

In particular, in some examples the relative location of the object and a shadow cast by that object in the image data can be used in order to determine the location of the object in the scene.

Consider, for example, the example situation of a cricket match as illustrated in Figure 2 of the present disclosure. If the game is played outdoors then, on a sunny day, the sun will cast a shadow from the objects in the scene. The position of the sun in the sky for a given date and time will be known for an image taken from a certain geographical location. Image metadata provided by the image capture device can be used in order to determine the data, time and geographical location of image capture. Therefore, the relative location of the shadow and the object which casts that shadow can be analysed by the detecting unit 3006 in order to determine properties indicative of the location of the object. Alternatively, if played indoors, then, if the location of a light source is known (or appears in the image data) the relative location of the object and the shadow in the image data can be coupled with the location of the light source in order to determine properties indicative of the location of the object.

Of course, the one or more properties of the object detected by the detecting unit 3006 are not particularly limited to the above described example properties of the object. Any suitable property which can be detected from the image data which provides information about the location of the object in the scene can be detected by the detecting unit 3006 in accordance with embodiments of the disclosure.

For example, the detecting unit 3006 may further use the relative location of the object between images captured by the image capture device 3006 in order to determine certain properties of the object (such as the speed and direction of travel of the object) which can then be used in order to constrain the location of the object in the scene between the images which have been captured by the image capture device.

In this manner, the detecting unit 3006 is configured to detect one or more properties of the object from the image data, the properties of the object indicative of an observed location of the object in the scene.

### <Generating unit>

As described with reference to Figure 3 of the present disclosure, the apparatus 3000 comprises a generating unit 3008 is configured to generate location information of the object in the scene using the predicted location information and the one of more properties of the object.

As explained with reference to Figure 3 of the present disclosure, the detecting unit 3006 is able to detect one or more properties of the object from the image data which are indicative of the location of the object in the scene. As such, even using images captured from a simple image capture system (e.g. a single image capture device) information regarding the three dimensional location of the object in the scene can be determined. However, this information can be detected only for the limited number of instances of time at which the image capture device captures an image of the scene. As such, apparatus 3000 is configured to use the one or more properties of the object which have been detected with the predicted location information in order to generate location information for the object at any instance of time (i.e. a continuous path of the object through the scene).

That is, as described above, the acquiring unit 3004 acquires an initial predicted location of the object in the scene. Moreover, the detecting unit 3006 detects one or more properties of the object from the image data, the properties of the object indicative of an observed location of the object in the scene. However, the observed location of the object in the scene is a location of the object within a three dimensional environment which has been estimated from image data from a single image capture device (such as image capture device 2006). Moreover, the image data which is acquired from the image capture device corresponds to the images which have been captured by the image capture device. Therefore, if the number of images captured by the image capture device is low and/or the object moves at a relatively high speed when through the environment, then the location information which has been obtained by the detecting unit 3006 may be limited. In other words, the detecting unit 3006 provides only a set of discrete locations of the object in the environment at different times (corresponding to the time of image capture) and may not provide sufficient information of the location of the object over time in order for additional information of the object to be determined.

As such, according to the present disclosure, the generating unit 3008 is configured in order to use the predicted location information of the object and the one or more properties of the object which have been detected in order to generate the final location information of the object in the scene.

Consider, now, Figure 5B of the present disclosure. Figure 5B illustrates the generation of location information of an object in accordance with embodiments of the disclosure.

In this example, the player 2000 is shown. The player 2000 has bowled a ball towards the target 2004 (e.g. cricket stumps). The predicted path of the object P which has been acquired by acquiring unit 3004 is shown. Furthermore, the location of the ball as detected from the image data acquired by the acquiring unit 3002 is shown. Specifically, in this example, the acquiring unit 3002 acquired the three images I1, 12 and 13 from the image capture device such that the detecting unit 3006 detected the location of the ball from these three images. Accordingly, the location of the ball corresponding to each of these three images 200211, 200212 and 200213 is also illustrated in Figure 5B.

As shown in Figure 5B, the location observed location of the ball (being the location detected by the detecting unit 3006) deviates from the predicted location information P (i.e. the default trajectory) which has been acquired by acquiring unit 3004. For example, the ball 200211 as detected in image I1 is higher than the predicted path P, while the location at which the ball hits the ground 200213 is closer to the target 2004 than that shown by the predicted path P.

Hence, these differences between the observed location of the ball and the predicted location information can be used in order to constrain the predicted location information such that the predicted location information more accurately and reliably represents the location of the ball which has been observed.

In some examples, the generating unit 3008 may use a minimizer function (such as a least squares function or the like) in order to generate the location information which best matches the one or more properties of the object which have been detected.

When the image data acquired from the image capture device comprises a plurality of images of the scene, the generating unit 3008 is configured to generate location information of the object in the scene using one or more properties of the image detected from each of the plurality of images. Furthermore, in some examples, as more images are acquired by acquiring unit 3002, the generating unit 3008 can use one or more properties of the image detected from these additional images in order to further constrain the location information of the object.

In other words, the properties of the object indicative of the observed location of the object in the scene can be used in order to constrain the predicted location of the object and thus provide a new path of the object through the scene.

In the example of Figure 2 of the present disclosure, the predicted location of the object in the scene is a default trajectory of the ball through the scene. As previously explained, in some example situations, the default trajectory of the ball may be defined by a number of trajectory coefficients. The one or more properties of the object can then be used in order to calculate new values for these trajectory coefficients which can thus be used in order to constrain the default path of the object based on the observed location of the ball.

Therefore, in some examples of the present disclosure, the generating unit 3008 is further configured to use the one or more properties of the object (e.g. speed of the object, location of the object and the like) to constrain the location of the object within the region indicated by the predetermined predicted location information.

For example, in some situations, the predicted location of the ball may be defined by default speed of the ball. The speed of the ball will remain the default speed unless the speed of the ball is known from another source (such as the image data which has been acquired). As such, if the one or more properties of the object detected by the detecting unit 3006 include the speed of the ball, the speed of the ball can then be adapted from the default value based on the observed speed of the ball. This enables the predicted location of the ball to be constrained based on the properties of the object detected by the detecting unit 3006.

In some examples, a coefficient or parameter which defines the default trajectory of the ball may be gradually or iteratively changed from the default value as further image data is acquired by the acquiring unit 3002. That is, when the ball tracking is performed in a substantially real time environment as the images are captured by the image capture device, the values of the coefficient or parameter may be changed as further images are captured by the image capture device. This enables the location information of the object to be adapted as new image data is obtained thus improving the accuracy and reliability of the location information which is generated.

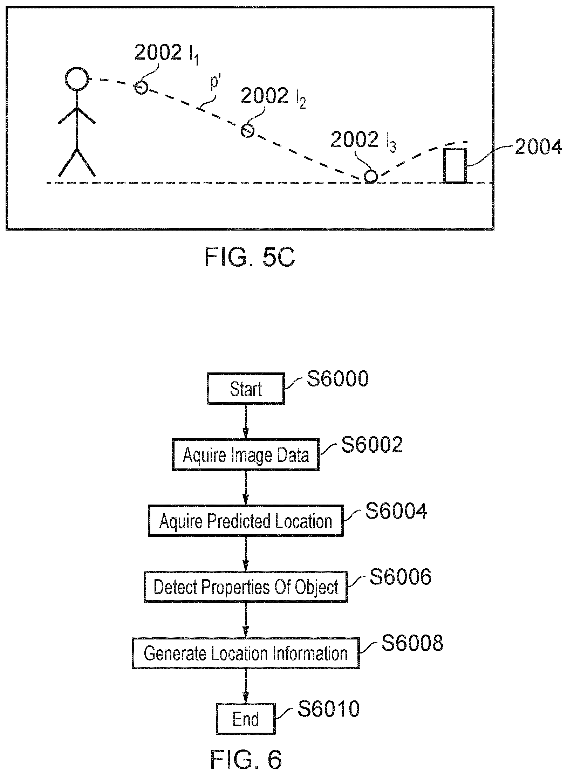

Figure 5C illustrates location information of an object in accordance with embodiments of the disclosure. That is, Figure 5C illustrates the same example situation as described with reference to Figure 5B of the present disclosure. However, in this example, the generating unit 3008 has used the predicted location information P and the one or more properties of the ball detected from the image data which has been acquired in order to generate the location information of the ball P'. The location information of the ball P' provides information on the path of the ball through the scene at any instance of time since the ball has been bowled by the player (i.e. provides a continuous representation of the object in the three dimensional environment). As explained above, this location information P' may, in some examples, have been generated by adjusting the predicted location information of the object such that it more closely matches the one or more properties of the object which have been detected. Therefore, the location information P' more closely correlates with the predicted location information P illustrated in Figure 5B.

As such, the location of an object within a scene can be efficiently and reliably determined from images obtained from a single image capture device (such as image capture device 2006).

In some examples, the location information of the object in the scene which is generated by the generating unit 3008 is a three dimensional path or curve trajectory which represents the location of the object in the scene over time. As explained above, this path (or curve trajectory) is acquired by constraining a default path of the object (the predicted location) based on the one or properties of the object which have been determined from the image data acquired by the acquiring unit 3004.

Furthermore, once the location information of the object has been generated by generating unit 3008, this location information can then be used in order to determine additional information regarding the object. For example, the location information of the object may be used in order to define a three dimensional search ellipse representing where the ball is likely to be located at a particular future time, depending on what information has already been given. In other words, the location information can be extrapolated in order to determine the likely location of the ball at a future instance of time. The size of the search ellipse may be based on the uncertainty in the model and may shrink as further image data is acquired from the image capture device.

In fact, the location information of the object may be used in order to determine the time and location at which the ball hit the ground (i.e. bounced) even if the time of bounce was not captured in the image data itself (owing to the discrete nature of the images). The confidence (level of uncertainty) in the bounce time will depend, at least in part, on the amount of pre-bounce image data which is acquired by the image capture device. In an example situation where the amount of pre-bounce image data is limited, the range of bounce times can be constrained by determining that the actual ball speed is within a certain percentage range of the default ball speed (e.g. within a range of 5% of the default ball speed for the player). Moreover, as more post-bounce image data is acquired, the post-bounce data may be used in order to more accurately determine the bounce time and position. That is, the pre-bounce image data can be supplemented with post-bounce image data in order to more accurately constrain the pre-bounce trajectory through further refinement of the coefficients of the default trajectory.

In some examples, the detecting unit 3006 may have detected the height of the ball at the time it passes the target 2004 (relative to the known height of the target) as one or more properties of the object. The generating unit 3008 may use this information in order to further constrain the location information of the object. In particular, the generating unit 3008 may be configured to adjust a post bounce velocity vector of the ball such that the location information (e.g. trajectory of the ball which has been generated) intersects the line at X = 0, Z = stump height. In some examples, the post bounce information should have no spin in any direction on the drag curve, only gravity and wind resistance should be acting on the ball at this stage.

Furthermore, the location information which has been generated by the generating unit 3008 may also be used in order to obtain further information such as the spin of the ball, for example. That is, once the location information of the object through the scene has been generated by the generating unit, the parameters of the default trajectory of the object have been constrained. As such, these parameters can then be used in order to determine certain further information (such as the spin of the ball) depending on the path of the object through the scene. For example, if the path of the object through the scene shows that the ball swerves sideways along its path, then it can be determined that the ball spins about its vertical axis. Moreover, if the path of the object through the scene shows that the ball changes direction at the bounce (at the point of contact with the ground) a level of spin imparted to the ball (e.g. in revolutions per minute) can again be determined.

The location information of the object (i.e. the generated path or curve trajectory of the object) may be particularly useful for a person (such as a coach or the like) who wishes to use the additional information in order to assist in training the player such that they can improve their performance in the sport. Furthermore, this additional information may be particularly useful for an adjudicator, referee or umpire who is tasked with determining whether or not a player who plays the sport (such as cricket) follows certain rules and restrictions of the game. For example, it may be necessary to determine whether or not the ball would have reached the target if it had not been illegitimately impeded by an object other than the bat of the second player.

In this manner, the generating unit 3008 of the apparatus 3000 generates location information of the object.

### <Advantageous Technical Effects>

In accordance with the embodiments of the present disclosure, the location of an object within a scene can be efficiently and reliably determined from images obtained from a single image capture device. Thus, the hardware requirements to generate location information of an object within a scene are substantially reduced.

The location of the object in the images of the scene can be further analysed in order to determine further additional information regarding the object. Indeed, the additional information (including the location of the object) which can be determined by embodiments of the disclosure may be particularly advantageous when used for training in order to improve the performance of a physical skill or performance of a physical task.

### <Additional Modifications>

As previously described (with reference to Figure 3 of the present disclosure) the detecting unit 3006 of apparatus 3000 is configured to detect one or more properties of the object indicative of the observed location of the object in the scene from the image data which has been acquired.

However, in some situations, the detecting unit 3006 may also be configured to use one or more additional sources of information in order to determine the one or more properties of the object. That is, the detecting unit may be configured to detect said properties of the object using information additional to the image data which has been acquired from the image capture device.

In some examples, the image capture device 2006 may also provide an audio recording from the scene. This audio recording can then also be used by the detecting unit 3006 in order to detect the one or more properties of the object.

For example, in some situations, the detecting unit may use information related to the speed of the object in order to further restrict the location of the object in the scene. That is, if audio from the scene is also available, then the audio may be used by the detecting unit when detecting the location of the object. Consider again the example of Figure 2 of the present disclosure. The ball will make a noise when it bounces on the ground. The sound of the ball bouncing on the floor can then be detected in the audio recording in order to identify the time at which the ball makes contact with the floor. This can then be used as a further constraint of the location of the object within the three dimensional environment.

In other examples, the detecting unit 3006 may be configured to use further information such as the speed of the ball as detected by an external device (such as a radar gun) when detecting the one or more properties of the object in accordance with the present disclosure. This further information (such as the speed of the ball) may be received by apparatus 3000 directly from the external device. Alternatively, or in addition, this further information may be provided to apparatus 3000 by a user (such as coach 2006) using a user input device such as user input 1006 as described with reference to Figure 1 of the present disclosure.

Furthermore, in other examples, certain information may be provided to apparatus 3000 describing the location from which the ball is bowled (e.g. as input by a user such as coach 2008, for example). This information may also be used by detecting unit 3006 as an additional source of information when detecting the one or more properties of the object.

As such, the detecting unit 3006 may further be configured to use certain additional sources of information (such as a sound or audio recording) when detecting the one or more properties of the object. This can further improve the accuracy and reliability of the information regarding the observed location of the ball in the scene which is determined.

### <Method>

In accordance with embodiments of the disclosure, a method of generating location information of an object in a scene is provided. Figure 6 illustrates an example method of the present disclosure.

The method of Figure 6 starts at step S6000 and proceeds to step S6002.

In step S6002, the method comprises acquiring image data of a scene from an image capture device. Once the image data has been acquired, the method then proceeds to step S6004.

In step S6004, the method comprises acquiring predicted location information of an object in the scene indicative of a region of the scene in which the object is predicted to be located at a given time. Then, the method proceeds to step S6006.

In step S6006, the method comprises detecting one or more properties of the object from the image data, the properties of the object indicative of an observed location of the object in the scene. Once the one or more properties of the object have been detected form the image data, the method proceeds to step S6008.

In step S6008, the method comprises generating location information of the object in the scene using the predicted location information and the one of more properties of the object.

The method then proceeds to and ends with step S6010.

Of course, it will be appreciated that while the steps of the method have been described in sequence the present disclosure is not particularly limited in this regard. That is, the steps of the method of the present disclosure may be performed in an order different to the order which is illustrated in Figure 6 of the present disclosure. For example, a number of the steps of the method (such as steps S6002 and S6004) may be performed in a different sequence to that illustrated in Figure 6. In fact, a number of the steps of the method of the present disclosure may also be performed in parallel.

While the embodiments of the disclosure have, in part, been described with reference to an example situation such as that illustrated in Figure 2 of the present disclosure, it will be appreciated that the present disclosure is not particularly limited in this respect. For example, the embodiments of the disclosure (such as apparatus 3000) can be used in order to determine location information for an object other than a ball in a sporting event. Indeed, the embodiments of the disclosure may be applied to any type of event where it is desired that location information of an object is determined from images captured by a simple image capture system (such as a single image capture device). Moreover, even in the context of sporting events, the embodiments of the present disclosure can be applied more generally to any sport where it is desired that the location of an object is determined (e.g. football, snooker, golf or the like).

Furthermore, embodiments of the present disclosure can further be arranged in accordance with the following numbered clauses:
1) Apparatus for generating location information of an object in a scene, the apparatus comprising circuitry configured to:
   acquire image data of a scene from an image capture device;
   acquire predicted location information of an object in the scene indicative of a region of the scene in which the object is predicted to be located at a given time;
   detect one or more properties of the object from the image data, the properties of the object indicative of an observed location of the object in the scene; and
   generate location information of the object in the scene using the predicted location information and the one of more properties of the object.
2) The apparatus according to clause 1, wherein circuitry is further configured to use the one or more properties of the object to constrain the location of the object within the region indicated by the predetermined predicted location information.
3) The apparatus according to clause 1 or 2, wherein the image data comprises a plurality of images of the scene and wherein the circuitry is further configured to generate location information of the object in the scene using one or more properties of the image detected from each of the plurality of images.
4) The apparatus according to clause 3, wherein the location information generated by the circuitry using the predicted location information and the one or more properties of the object comprises a path of the object through the scene.
5) The apparatus according to clause 4, wherein the circuitry is further configured to generate additional information regarding the object using the path of the object through the scene.
6) The apparatus according to clause 5, wherein the additional information comprises information including at least one of a speed of the object, a spin of the object and/or a location of the object at a future time.
7) The apparatus according to any preceding clause, wherein the one or more properties of the object comprise at least one of a two dimensional location of the object in the image data, a size of the object in the image data, a relative position of the object to a second object at a predetermined location in the scene and a relative location of the object and a shadow formed by the object on a surface.
8) The apparatus according to any preceding clause, wherein the predetermined predicted location of the object comprises a default trajectory of the object through the scene.
9) The apparatus according to clause 8, wherein the default trajectory of the object through the scene is characterised by one or more trajectory coefficients and wherein generating the location information of the object in the scene comprises adjusting the values of the one or more trajectory coefficients from their initial values using the one or more properties of the object which have been detected.
10) The apparatus according to any preceding clause, wherein the circuitry is further configured to acquire different predetermined predicted location information of the object depending on a type of the object.
11) The apparatus according to clause 10, wherein the object is a ball and wherein the ball is bowled by a player and wherein the circuitry is further configured to acquire different predetermined predicted location information depending on the player who bowled the ball.
12) The apparatus according to clause 11, wherein the apparatus is further configured to generate the location information of the object in the scene using the predetermined predicted location information, the one or more properties of the object and at least one of an initial location from where the ball is bowled, an initial speed of the ball when the ball is bowled and/or a time at which the ball contacts the ground.
13) The apparatus according to clause 12, wherein the circuitry is further configured to acquire audio to determine the time at which the ball contacts the ground.
14) The apparatus according to any preceding clause, wherein the apparatus is configured to be calibrated using the position of one or more predetermined features in an initial image of the scene.
15) Method of generating location information of an object in a scene, the method comprising:
   acquiring image data of a scene from an image capture device;
   acquiring predicted location information of an object in the scene indicative of a region of the scene in which the object is predicted to be located at a given time;
   detecting one or more properties of the object from the image data, the properties of the object indicative of an observed location of the object in the scene; and
   generating location information of the object in the scene using the predicted location information and the one of more properties of the object.
16) Computer program product comprising instructions which, when the instructions are implemented by a computer, cause the computer to perform a method of generating location information of an object in a scene, the method comprising:
   acquiring image data of a scene from an image capture device;
   acquiring predicted location information of an object in the scene indicative of a region of the scene in which the object is predicted to be located at a given time;
   detecting one or more properties of the object from the image data, the properties of the object indicative of an observed location of the object in the scene; and
   generating location information of the object in the scene using the predicted location information and the one of more properties of the object.

Obviously, numerous modifications and variations of the present disclosure are possible in light of the above teachings. It is therefore to be understood that within the scope of the appended claims, the disclosure may be practiced otherwise than as specifically described herein.

In so far as embodiments of the disclosure have been described as being implemented, at least in part, by software-controlled data processing apparatus, it will be appreciated that a non-transitory machine-readable medium carrying such software, such as an optical disk, a magnetic disk, semiconductor memory or the like, is also considered to represent an embodiment of the present disclosure.

It will be appreciated that the above description for clarity has described embodiments with reference to different functional units, circuitry and/or processors. However, it will be apparent that any suitable distribution of functionality between different functional units, circuitry and/or processors may be used without detracting from the embodiments.

Described embodiments may be implemented in any suitable form including hardware, software, firmware or any combination of these. Described embodiments may optionally be implemented at least partly as computer software running on one or more data processors and/or digital signal processors. The elements and components of any embodiment may be physically, functionally and logically implemented in any suitable way. Indeed the functionality may be implemented in a single unit, in a plurality of units or as part of other functional units. As such, the disclosed embodiments may be implemented in a single unit or may be physically and functionally distributed between different units, circuitry and/or processors.

Although the present disclosure has been described in connection with some embodiments, it is not intended to be limited to the specific form set forth herein. Additionally, although a feature may appear to be described in connection with particular embodiments, one skilled in the art would recognize that various features of the described embodiments may be combined in any manner suitable to implement the technique.

## Claims

1. Apparatus for generating location information of an object in a scene, the apparatus comprising circuitry configured to:
acquire image data of a scene from an image capture device;
acquire predicted location information of an object in the scene indicative of a region of the scene in which the object is predicted to be located at a given time;
detect one or more properties of the object from the image data, the properties of the object indicative of an observed location of the object in the scene; and
generate location information of the object in the scene using the predicted location information and the one of more properties of the object.

2. The apparatus according to claim 1, wherein circuitry is further configured to use the one or more properties of the object to constrain the location of the object within the region indicated by the predetermined predicted location information.

3. The apparatus according to claim 1, wherein the image data comprises a plurality of images of the scene and wherein the circuitry is further configured to generate location information of the object in the scene using one or more properties of the image detected from each of the plurality of images.

4. The apparatus according to claim 3, wherein the location information generated by the circuitry using the predicted location information and the one or more properties of the object comprises a path of the object through the scene.

5. The apparatus according to claim 4, wherein the circuitry is further configured to generate additional information regarding the object using the path of the object through the scene.

6. The apparatus according to claim 5, wherein the additional information comprises information including at least one of a speed of the object, a spin of the object and/or a location of the object at a future time.

7. The apparatus according to claim 1, wherein the one or more properties of the object comprise at least one of a two dimensional location of the object in the image data, a size of the object in the image data, a relative position of the object to a second object at a predetermined location in the scene and a relative location of the object and a shadow formed by the object on a surface.

8. The apparatus according to claim 1, wherein the predetermined predicted location of the object comprises a default trajectory of the object through the scene.

9. The apparatus according to claim 8, wherein the default trajectory of the object through the scene is **characterised by** one or more trajectory coefficients and wherein generating the location information of the object in the scene comprises adjusting the values of the one or more trajectory coefficients from their initial values using the one or more properties of the object which have been detected.

10. The apparatus according to claim 1, wherein the circuitry is further configured to acquire different predetermined predicted location information of the object depending on a type of the object.

11. The apparatus according to claim 10, wherein the object is a ball and wherein the ball is bowled by a player and wherein the circuitry is further configured to acquire different predetermined predicted location information depending on the player who bowled the ball.

12. The apparatus according to claim 11, wherein the apparatus is further configured to generate the location information of the object in the scene using the predetermined predicted location information, the one or more properties of the object and at least one of an initial location from where the ball is bowled, an initial speed of the ball when the ball is bowled and/or a time at which the ball contacts the ground.

13. The apparatus according to claim 12, wherein the circuitry is further configured to acquire audio to determine the time at which the ball contacts the ground.

14. Method of generating location information of an object in a scene, the method comprising:
acquiring image data of a scene from an image capture device;
acquiring predicted location information of an object in the scene indicative of a region of the scene in which the object is predicted to be located at a given time;
detecting one or more properties of the object from the image data, the properties of the object indicative of an observed location of the object in the scene; and
generating location information of the object in the scene using the predicted location information and the one of more properties of the object.

15. Computer program product comprising instructions which, when the instructions are implemented by a computer, cause the computer to perform a method of generating location information of an object in a scene, the method comprising:
acquiring image data of a scene from an image capture device;
acquiring predicted location information of an object in the scene indicative of a region of the scene in which the object is predicted to be located at a given time;
detecting one or more properties of the object from the image data, the properties of the object indicative of an observed location of the object in the scene; and
generating location information of the object in the scene using the predicted location information and the one of more properties of the object.
